# EUROPEAN PATENT APPLICATION

(11) **EP 3 648 412 A1**
(43) Date of publication of application: **06.05.2020**
(21) Application number: 19202579.9
(22) Date of filing: 10.10.2019
(51) Int. Cl.: H04L 12/28, G01D 4/00, G01D 21/00, H04L 12/26, H04Q 9/00

(54) **SENSOR METHODS AND APPARATUS**

(30) Priority: 31.10.2018 GB 201817825
(71) Applicant: Centrica PLC, Windsor, Berkshire SL4 5GD (GB)
(72) Inventor: WRIGHT, Christopher John, 1015 Lausanne (CH); LAWRENSON, Matthew, 1015 Lausanne (CH); BEARD, Tim, 1015 Lausanne (CH)
(74) Representative: Kent, Miranda Jacket

(57) **Abstract**

There are described methods and systems for identifying an operative state of a device using sensor signatures and for identifying such sensor signatures. The methods may comprise determining, from a received plurality of sensor signals and received device operation information, a sensor signature comprising values of a combination of different measurable characteristics that are indicative of an operative state of a device; and associating the determined sensor signature with attributes of a training space. Such sensor signatures may be used to identify the operative state of a device or appliance in a monitoring space.

## Description

The present application relates to using multiple sensors to detect or identify operation of specific appliances or devices. In particular, the application relates to methods for training a system to provide identification and/or control functionality based on the output from a plurality of sensors.

Various sensors can be used to measure certain characteristics in an environment. For example, temperature, visible light, infrared, motion or sound (acoustic) or electromagnetic sensors may be used. The outputs from these sensors can be combined to detect various characteristics which may be indicative of the operation or operating condition or state of a certain device or appliance. For example for a water tap, sensor signals may be used to determine whether it is on or off. In addition it may be possible to identify if the tap is dripping (e.g. a slow flow). For an appliance such as an electric kettle, on and off operations can be identified from a plurality of sensor signals. In addition, an event such as the boiling of the kettle may be identified as a distinct operation or event. The term device or appliance may be used quite broadly and could, for example, cover a door. A combination of sensor signals may provide an indication of whether a door is open or closed.

The present application seeks to provide an improved means for identifying or detecting the operation of devices in an environment from a combination of different sensor outputs.

Aspects of the invention are set out in the independent claims and preferable features are set out in the dependent claims.

There is described herein a method of identifying a sensor signature indicative of an operative state of a device, the method comprising: providing a plurality of sensors in a training space, each sensor operable to measure a different characteristic; determining the values of one or more attributes of the training space; receiving a plurality of sensor signals, each sensor signal indicative of a different characteristic measured by one of the plurality of sensors in the training space; receiving device operation information comprising the type and operative state of a device in the training space; determining, from the received plurality of sensor signals and the received device operation information, a sensor signature comprising values of a combination of different measurable characteristics that are indicative of an operative state of the device; associating the determined sensor signature with the determined values of the one or more attributes of the training space; and storing the determined sensor signature together with the associated values of the one or more attributes of the training space.

A plurality comprises at least two, but can include higher numbers. In some embodiments there are at least three sensors (and at least three corresponding sensor signals), or at least five sensors (and at least five corresponding sensor signals).

In some embodiments, the order of the method steps differs from that set out above; for example receiving device operation information comprising the type and operative state of a device in the training space could be performed before receiving a plurality of sensor signals, each sensor signal indicative of a different characteristic measured by one of the plurality of sensors in the training space.

The characteristics measured by the sensors can be selected from one of: sound, humidity, electromagnetic noise, motion and light (visible light, such as a camera and/or infrared light).

A sensor signature can also be referred to as a "synthetic sensor signature" as it is made up of sensor measurements from multiple different sensors. In some embodiments, the sensor signature comprises the values of at least two characteristics of the same type (e.g. from sensors located in different locations in the space).

In some embodiments the sensor signature comprises information regarding the locations of the sensors in relation to the device and/or to the other sensors.

Preferably, receiving device operation information comprises: receiving a communication from the device in the training space, the communication comprising the operative state of the device (and preferably the type of appliance, or an appliance identifier). In such cases, the device is generally a "smart" device, with reporting and communication capabilities. The communication can be a wireless communication, or could be wireless.

Optionally, receiving device operation information comprises: receiving a copy of a control command sent to the device. For example the device can be controlled by a central controller, e.g. a control hub or thermostat, which sends control commands to the device, e.g. over a wireless interface. The controller can at the same time send a copy of that control command to the monitoring device/system to enable generation of a sensor signature indicative of operation of that device.

In some embodiments, device operation information can be received from a user, e.g. via a user input on a user interface. Such user input can indicate the device type and/or another identifier of the device, and the operative state and/or control performed for the device.

There is also described a method of identifying the dependence of a sensor signature on attributes of a space, the method comprising: performing a method substantially as described above in a first training space having a first set of values of one or more attributes to determine a first sensor signature comprising a first set of values of a combination of different measurable characteristics that are indicative of an operative state of a device that is associated with the first set of attributes; performing a method substantially as described above in a second training space having a second set of values of the one or more attributes to determine a second sensor signature comprising a second set of values of the combination of different measurable characteristics that are indicative of the operative state of the device that is associated with the second set of values of the one or more attributes; comparing the first set of values of the one or more attributes and the second set of values of the one or more attributes; comparing the first sensor signature and the second sensor signature; and correlating changes in each of the attributes with changes in the values of the different measurable characteristics of the sensor signatures.

The device in the second training space will be similar to the device in the first training space. For example, the device in the first training space will the same type or broad category of device, e.g. washing machine, dishwasher, kettle, tap, door, as the device in the second training space. In some embodiments the device in the first training space is also of the same model as the device in the second training space, but this is not always necessary.

There is also described herein a method of identifying the dependence of a sensor signature on attributes of a space, the method comprising: performing a method substantially as described above in a first training space having a first set of values of one or more attributes to determine a first sensor signature comprising a first set of values of a combination of different measurable characteristics that are indicative of an operative state of a device that is associated with the first set of values of the one or more attributes; altering one or more of the attributes of the first training space, to provide a second set of values of the one or more attributes; performing the method substantially as described above in the first training space having the second set of values of the one or more attributes to determine a second sensor signature comprising a second set of values of the combination of different measurable characteristics that are indicative of the operative state of the device that is associated with the second set of values of the one or more attributes; comparing the first set of values of the one or more attributes and the second set of values of the one or more attributes; comparing the first sensor signature and the second sensor signature; and correlating changes in each of the attributes with changes in the values of the different measurable characteristics of the sensor signatures.

Preferably, the step of correlating changes in each of the attributes with changes in the values of the different measurable characteristics of the sensor signatures comprises: identifying an attribute score for each of the attributes indicative of the sensitivity of the sensor signature to the attribute, based on the comparison of the first set of values of the different measurable characteristics and the second set of values of the different measurable characteristics and the comparison of the first set of values of the one or more attributes and the second set of values of the one or more attributes.

In some embodiments the method further comprises identifying the operative state of a device in a monitoring space by: determining the values of the one or more attributes of for the monitoring space; receiving a plurality of sensor signals, each sensor signal indicative of a different characteristic measured in the monitoring space; identifying the determined sensor signature as being relevant to the monitoring space based on a comparison of the values of the one or more attributes of the training space and the values of the one or more attributes of the monitoring space; comparing the plurality of sensor signals to the determined sensor signature; and identifying an operative state of a device in the space based on the comparison.

There is also described herein a method of identifying the operative state of a device in a monitoring space, the method comprising: determining the values of one or more attributes of the monitoring space; receiving a set of sensor signatures, each signature comprising values of a plurality of different measurable characteristics that are indicative of an operative state of a device; selecting, from the set of sensor signatures, a subset of relevant sensor signatures based on the values of the one or more attributes of the monitoring space; receiving a plurality of sensor signals, each sensor signal indicative of a different characteristic measured in the monitoring space; comparing the plurality of sensor signals to the subset of relevant sensor signatures; and identifying an operative state of a device in the monitoring space based on the comparison.

In some embodiments, the order of the steps may differ from that set out in the method above; for example receiving a set of appliance signatures and/or identifying the subset of space-specific appliance signatures may be performed after the step of receiving a plurality of sensor signals.

Preferably, the method further comprises: controlling the operation of the device (and/or another device) in the monitoring space based on the identification of the operative state of the device in the monitoring space. For example, a control command could be selected based on the operative state of the device in the monitoring space and sent to the device in the monitoring space, e.g. via wireless communication.

Preferably, the method further comprises: outputting the identified operative state of the appliance device in the monitoring space, and more preferably outputting an identifier of the device/device type, optionally by displaying information indicative of the identified operative state on a user interface. The user interface could be a screen of a display device, such as a touch screen. The display device could be a mobile user device, such as a smartphone or tablet. In some embodiments, the display is via a web interface.

Preferably the method further comprises: calculating (and optionally outputting) a utility consumption (rate) based on the identified operative state of the device in the monitoring space, such as electricity, gas or water consumption. For example, the utility consumption rate of the device in the monitoring space can be calculated based on the identified operative state and the identified type (and optionally model) of device. A lookup table may be used determine the utility consumption of the type of device (and optionally particular model) in each operative state.

Outputting the utility consumption (rate) could be via a user interface.

The utility consumption (in a certain time period) can be calculated based on the calculated utility consumption rate and the length of time the device is found to be consuming the utility at that rate.

Preferably, the step of comparing the plurality of sensor signals to the determined sensor signature or the subset of relevant sensor signatures comprises: identifying the difference between each measured characteristic and the value of the corresponding measurable characteristic in the determined sensor signature or the subset of relevant sensor signatures.

Preferably, identifying the determined sensor signature as being relevant to the monitoring space or selecting a subset of relevant sensor signatures comprises: calculating for each sensor signature a similarity score based on a comparison of the associated values of the one or more attributes of the sensor signature and the values of the one or more attributes of the monitoring space.

Optionally each characteristic is assigned a weighting to calculate the similarity score. Peferably the weighting is selected in dependence on the attribute score for each of the attributes, more preferably the weighting for each attribute is proportional to its attribute score. For example, an attribute's weighting is higher if a given proportional change in the attribute affects the sensor signature more.

In some embodiments identifying the determined sensor signature as being relevant to the monitoring space or selecting a subset of relevant sensor signatures comprises: selecting for a particular operative state of a device in the monitoring space the sensor signature having either: the highest similarity score of a plurality of sensor signatures; and/or a similarity score that is higher than a predetermined similarity threshold.

Preferably the one or more attributes of the training or monitoring space are selected from the list comprising: spatial dimensions of the space or floorplan(s); electromagnetic resonance profile of the space; acoustic behaviour of the space; ambient temperature or thermal signature of the space.

There is also described a non-transient computer-readable medium comprising instructions which, when executed by a computer, cause the computer to carry out the method substantially as described above.

There is also described a system for identifying a sensor signature indicative of an operative state of a device, the system comprising: an interface operable to: receive signals from a plurality of sensors in a training space, each sensor operable to measure a different characteristic; receive signals indicative of the values of one or more attributes of the training space; and receive device operation information comprising the type and operative state of a device in the training space; a processor operable to: determine, from the received plurality of sensor signals and the received device operation information, a sensor signature comprising values of a combination of different measurable characteristics that are indicative of an operative state of the device; and associate the determined sensor signature with the determined values of the one or more attributes of the training space; and a memory operable to: store the determined sensor signature together with the associated values of the one or more attributes.

Preferably, the system is further operable to perform the method substantially as described above.

There is also described herein a monitoring device for identifying the operative state of a device in a monitoring space, the device comprising: an interface operable to: receive signals indicative of the values of one or more attributes of the monitoring space; and receive a plurality of sensor signals, each sensor signal indicative of a different characteristic measured in the monitoring space; a memory storing a set of sensor signatures, each signature comprising values of a plurality of different measurable characteristics that are indicative of an operative state of a device; a processor operable to: select, from the set of sensor signatures, a subset of relevant sensor signatures based on the values of the one or more attributes of the monitoring space; compare the plurality of sensor signals to the subset of relevant sensor signatures; and identify an operative state of a device in the monitoring space based on the comparison.

In some embodiments the signals from the sensors are received over a wireless interface, e.g. via Wi-Fi or Zigbee. In other embodiments the signal is received via a wired interface. In yet further embodiments, one or more of the plurality of sensors is integrated in the monitoring device itself.

Preferably, the processor is further operable to: select a control command for the device (and/or another device) based on the identified operative state of the device; and the monitoring device further comprises a communication interface operable to send to the device (and/or the another device) the control command. For example, the command may be sent via a wireless, e.g. Wi-Fi or Zigbee, connection.

Preferably the monitoring device further comprises: an interface, optionally a user interface such as a screen, operable to output details of the identified operation of the device in the monitoring space, and preferably an identifier of the device or device type.

In alternative embodiments, the monitoring device is operable to communicate with a user interface device (such as a wireless or mobile user device, e.g. a mobile phone or tablet) and to send detauls of the identified operation of the device in the monitoring space, and preferably an identifier of the device or device type, to the user interface device. Communication with the user interface device could be wireless, e.g. via Wi-Fi or Zigbee.

Preferably, the processor is further operable to: calculate a utility consumption (rate) based on the identified operation of the device, such as electricity, gas or water consumption; preferably further comprising an interface, optionally a user interface such as a screen, operable to output the calculated utility consumption (rate).

Optionally the processor is operable to compare the plurality of sensor signals to the determined sensor signature or the subset of relevant sensor signatures by: identifying the difference between each measured characteristic and the value of the corresponding measurable characteristic in the determined sensor signature or the subset of relevant sensor signatures.

Preferably, the processor is operable to identify the determined sensor signature as being relevant to the monitoring space or selecting a subset of relevant sensor signatures by: calculating for each sensor signature a similarity score based on a comparison of the associated values of the one or more attributes of the sensor signature and the values of the one or more attributes of the monitoring space.

Any system feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

### BRIEF DESCRIPTION OF THE FIGURES

Methods and systems for identifying the operation of appliances or devices in an environment are described by way of example only, in relation to the Figures, wherein:
Figure 1A shows an exemplary system for monitoring the operative states of devices using a plurality of sensors;
Figure 1B shows an exemplary method for determining operative states of devices using a plurality of sensor signals;
Figure 2A shows an exemplary system for generating sensor signatures indicative of the operative states of devices using a plurality of sensors;
Figure 2B shows an exemplary method for generating sensor signatures indicative of the operative states of devices using a plurality of sensors;
Figure 3A shows an exemplary method for determining the dependence of sensor signatures on space attributes;
Figure 3B shows an alternative exemplary method for determining the dependence of sensor signatures on space attributes;
Figure 4 shows an exemplary monitoring device for identifying the operative state of sensors in a space.

### DETAILED DESCRIPTION

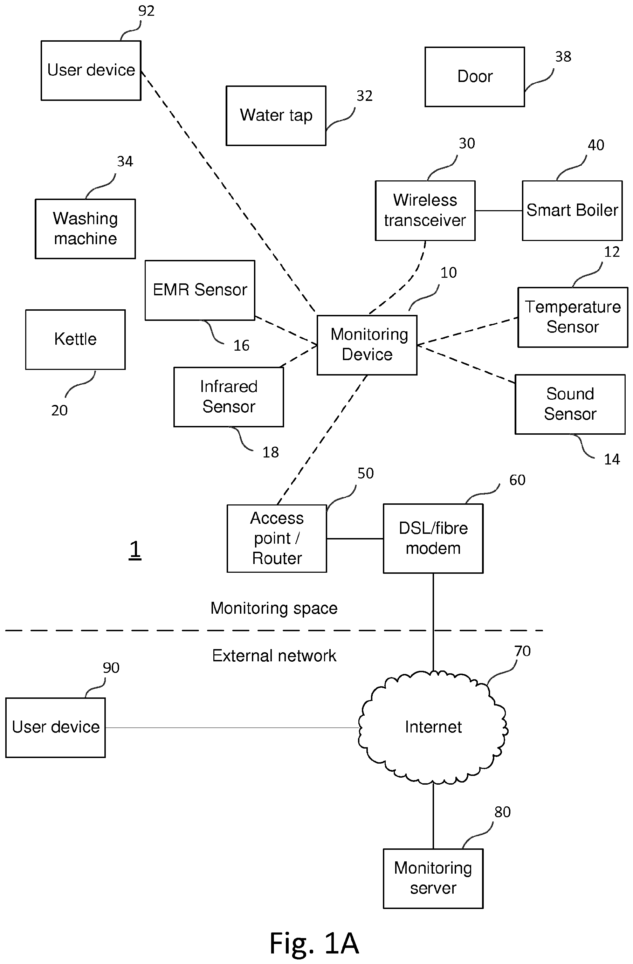

Figure 1A shows an exemplary system 1 for identifying the operation of a device based on signals from a plurality of sensors.

The system 1 comprises a plurality of devices and sensors within a monitoring space. For example, the monitoring space may be a user's home or a business premises. The monitoring space could be a single room or encompass multiple rooms.

The system 1 comprises a monitoring device 10, for example a smart device installed within or proximate to the monitoring space. The monitoring device 10 is in communication with a temperature sensor 12, a sound sensor 14, an EMR (electro-magnetic radiation) sensor 16 and an infrared sensor 18. Here the communication between the monitoring device 10 and the sensors is through a wireless (e.g. Zigbee or WiFi) connection.

The sensors 12, 14, 16, 18 each monitor a different characteristic of the monitoring space, in this case temperature, sound, EMR and IR. Each sensor sends a signal indicative of the monitored characteristic to the monitoring device 10. Sensor measurements may be taken by the sensors periodically, e.g. about every 1, 2, 5 or 10 seconds, or every 30 seconds, every minute or every 5 or 10 minutes. Sensor signals indicative of the measured characteristic may be sent to the monitoring device 10 as they are measured, or they may be stored on the sensor device and sent in batches to the monitoring device 10.

The monitoring space includes several devices, or appliances. There is a kettle 20, a water tap 32, a washing machine 34, a door 28 and a boiler 40. The boiler 40 is connected to a wireless transceiver 30, which allows wireless communication with the monitoring device 10. The boiler 40 is a smart boiler which sends information about its operative state to the monitoring device 10. The monitoring device 10 can also send commands to the boiler 40 via the wireless transceiver 30.

Based on the sensor signals the monitoring device 10 can identify operational states of the various devices. For example, outputs from the EMR sensor 16 and sound sensor 14 may be used to identify the operation of the kettle 20 boiling. Outputs from the temperature sensor 12 and the sound sensor 14 may be used to identify operational states of the door 28, e.g. whether the door is open or closed. Methods for identifying the operational states of devices are described in more detail below.

There is a user device 92 at the monitoring space, which is in short-range wireless communication with the monitoring device 10. The user device 92 is a dedicated user interface for the monitoring device, e.g. comprising a display and input means, such as a touchscreen or a display in addition to a keypad. The user device 92 can display information about the operative states of the devices/appliances at the monitoring space. The user device 92 can also be used by the user in setup of the monitoring system. For example a user can enter information about one or more of: the specific devices/appliances or types of devices/appliances within the monitoring space, the location of devices/appliances in the space, the sensors within the space and preferably their locations, and attributes or properties of the monitoring space such as the spatial dimensions.

At the monitoring space location there is also provided an access point/router 50 and DSL/fibre modem 60 for connecting the monitoring device 10 to the Internet 70.

The system 1 includes a remote monitoring server 80, which receives information about the operational states of the devices at the monitoring space. There is also a user device 90 in communication with the monitoring device 10. User device 90 could be a smartphone, laptop or tablet with an application that allows the user to interface with the monitoring device 10. For example, through the user device 90 it may be possible to display to a user information about the operative states of devices/appliances in the monitoring space even when the user is remote. In some cases the user can provide active control of devices or appliances at the monitoring space by inputting or selecting commands on the user device 10.

In some cases the functionality of the monitoring device 10 described in relation to Figure 1A is additionally/alternatively provided remotely, e.g. on the monitoring server 80.

In alternative embodiments the communication between devices and sensors could be through a wired connection.

Although specific sensors (sound, temperature, EMR and IR) have been described in the embodiment of Figure 1A, sensors for other characteristics (e.g. motion, visible light). In some embodiments, more than one sensor of the same type is provided at the monitoring space, at different locations within the monitoring space. The sensors may be dedicated sensors for the device monitoring function, or they may be sensors present in other (conventional) equipment provided for different purposes, e.g. light sensors in motion detectors or microphones in voice assistants. Connected appliances with sensing capabilities may also be used to provide sensor data. Mobile appliances such as automated/robotic vacuum cleaners, drones or helper robots with their own sensors can also be used to provide sensor signals.

Generally the sensors will each be provided as a separate device, although in some embodiments a single device or piece of equipment may contain multiple sensors for sensing multiple characteristics of the monitoring space. For example a "sensor board" comprising a number of different types, e.g. at least three sensors each measuring a different characteristic, or at least five sensors each measuring a different characteristic, may be provided.

Whilst in the example of Figure 1A only one of the appliances (the boiler 40) is a smart appliance, in further embodiments some of the other devices or appliances may also be "smart". Of course, the boiler could be a conventional, "dumb" boiler without wireless communication connectivity or the ability to report its status or operative state to the monitoring device 10.

In alternative embodiments, more/fewer devices, of different types to those shown in Figure 1A may be present. Examples of other devices that may be monitored in the monitoring space include kitchen blenders, ovens, toasters, air conditioning units, computers. Various other (household or workplace) appliances or devices whose operative state could be monitored using this system would be apparent to the skilled person. Generally any devices which change the characteristics of the space in which they are operating can be monitored by the systems and methods described herein.

In other embodiments, the user device 92 does not need to be a dedicated user interface. For example, it could be a smartphone, laptop or tablet with an application that allows the user to interface with the monitoring device 10.

Although in the embodiment described in Figure 1A the monitoring device 10 is in wireless communication with the sensors, in alternative embodiments one or more of the sensors can be integrated into the monitoring device 10 itself. For example the monitoring device may comprise the temperature sensor 12, the sound sensor 14, the EMR sensor 16 and/or the infrared sensor 18.

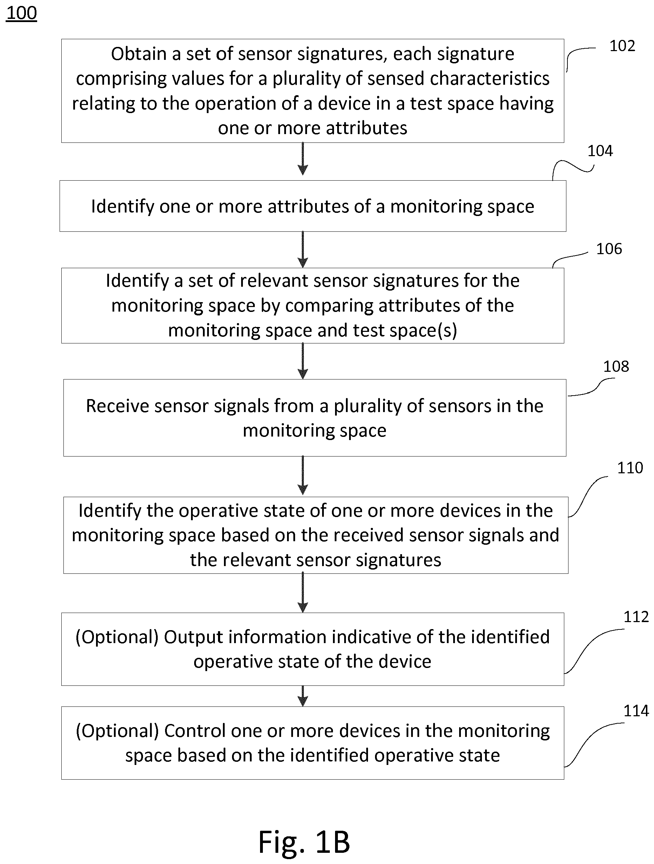

Figure 1B shows an exemplary method 100 for identifying the operation of a device based on signals from a plurality of sensors. The method starts by obtaining 102 a set of sensor signatures that are indicative of an operative state of a device. These sensor signatures may be predetermined, or pre-programmed, for example by a system operator or based on a model. Alternatively the sensor signatures may be determined from training data from a training space. Sensor signatures are sometimes referred to as synthetic sensor signatures. Each sensor signature comprises values for a plurality of (i.e. two or more) sensor signals. The sensor signals are each indicative of a different measurable characteristic, e.g. sound, light, motion, temperature. A measurement of the same type of characteristic at separate locations could comprise measurements of different measurable characteristics (e.g. a first temperature sensed in a first location, such as a first room, and a second temperature sensed in a second location, such as a second room or an ambient or outside temperature). Each signature is indicative of a specific operative state of a specific device or type of device. E.g. a signature may be indicative of a tap being in an On state, whilst another signature is indicative of a kettle at boiling point, and another signature being that of a washing machine being On, or even of a washing machine being on a spin cycle (and there may be different signatures that are indicative of the washing machine being in a wash cycle, rinse cycle etc.). The device type may be a broad class of devices (e.g. doors, washing machines, vacuum cleaners), or may be a specific type of device (e.g. make/model/size/specifications). The sensors may be fixed, or they may be mobile sensors (such as a sensor on a mobile robot vacuum cleaner.

At step 104 one or more attributes of a space to be monitored are identified. The attributes are generally permanent (or at least semi-permanent) attributes, e.g. the attributes will be maintained for a substantial amount of time, such as at least a few (e.g. 2, 4 or 6) hours, at least one day, at least a few (e.g. 2, 4 or 6) days or at least a few (e.g. 2, 4 or 6) weeks. For example attributes can include dimensions of the space (e.g. area/volume, length, width, and/or ceiling height of a room or building or part thereof), position of the sensor or sensors (e.g. an indication of whether the sensor is mounted on a wall, floor, ceiling or counter, or an indication of the specific wall, floor, ceiling or counter the sensor is located on, or an indication of the coordinates of the sensor in relation to the space), a three-dimensional (3D) spatial map or two-dimensional (2D) floorplan, of a room or building, an acoustic signature/profile, an electromagnetic signature/profile or a thermal signature/profile. Acoustic/electromagnetic/thermal profiles of the space can, for example, be a response function denoting the acoustic/electromagnetic/thermal measurements in response to a repeatable stimulus or test signal.

At step 106 a set of relevant sensor signatures for the monitoring space are identified. The relevant sensor signatures may be identified based on an indication of devices that are present in the monitoring space. For example, there may be prior information comprising the types of devices located in the monitoring space. Such prior information can be identified from a user input or from detecting a device in the monitoring space (for example from a message comprising a device or device type identifier transmitted by the device, e.g. periodically or on installation, or by detecting the presence of the device e.g. by a visual picture or photograph of the space). Thus it is possible to select as relevant only the sensor signatures indicative of the operative state or function of devices (or device types) that are actually present in the monitoring space.

The relevant sensor signatures are identified in step 106 by comparing the attributes of the monitoring space with attributes associated with each signature, e.g. attributes of the training space in which the sensor signature was learned. For example a measure of the similarity of the attributes of the monitoring space to the attributes associated with the signature can be calculated. The measure of similarity can be based on weighting the attributes according to the extent changing the attribute changes the value of the sensed characteristics. In some embodiments, for each function (or operation/operative state) of each device in the monitoring space, the most similar sensor signature is selected from the plurality of sensor signatures. In other embodiments there is a similarity threshold and if the similarity measure exceeds the threshold (e.g. the attributes are considered similar enough for the signature to be applicable) then the sensor signature is identified as relevant.

At step 108 sensor signals, or outputs, from a plurality of sensors in the monitoring space are received. The sensor outputs are each indicative of a characteristic (or condition) of the monitoring space, such as temperature, sound, light, motion, electromagnetic signals, infrared radiation. Normally the characteristic of the monitoring space is not a permanent characteristic (e.g. it is expected to vary, particularly with the operative states of devices in the space).

At step 110 the operative state of one or more devices in the monitoring space is identified from the received sensor signals and relevant signatures. For example, the received signals may be compared to the relevant signatures and if the combination of received sensor signals is similar enough (e.g. within a certain similarity threshold) to one of the relevant sensor signatures then the specific operation of the particular device/device type associated with the sensor signature is identified. For example, the received sensor signals may be within the similarity threshold for the "tap running" sensor signatures.

In some embodiments the similarity threshold for the signatures may be adjusted based on the comparison of the values of the attributes of the monitoring space and test space(s). For example, if the values of the attributes of a monitoring space are similar to the attributes of a test space then the received sensor signals may need to be required to be more similar to the sensor signature before the sensor signals are identified as being indicative of the operative state of that device (/device type) than if the values of the attributes are very different.

In optional step 112, information indicative of the identified operative state(s) of the one or more devices is output. This output information will generally include the operative state identified (e.g. off/on state or the particular operation, such as the setting or power rating, e.g. heating/cooling for an HVAC device, cycle for a washing machine or dishwasher, or the flow rate for a tap). The output information can include the device type (e.g. some or all of the general type/category, make, size, specifications) and optionally the information may include the location of said device, for example details of the location of the device in the monitoring space. The output information may be sent to a user interface (e.g. smart phone, tablet or dedicated display for the monitoring system) for display to a user. Additionally or alternatively the operative state of the device may be sent to a remote monitoring system, such as a cloud server.

In step 114, optionally one or more devices in the monitoring space are controlled based on the identified operative state of the device. For example, the operative state or mode of that device may be changed, or the operative state of another device in the system may be changed. In some embodiments the operative state or mode of another, e.g. second, device may be altered based on the operative state of a first device identified in step 110. Step 114 may be performed in addition to, or instead of, step 112.

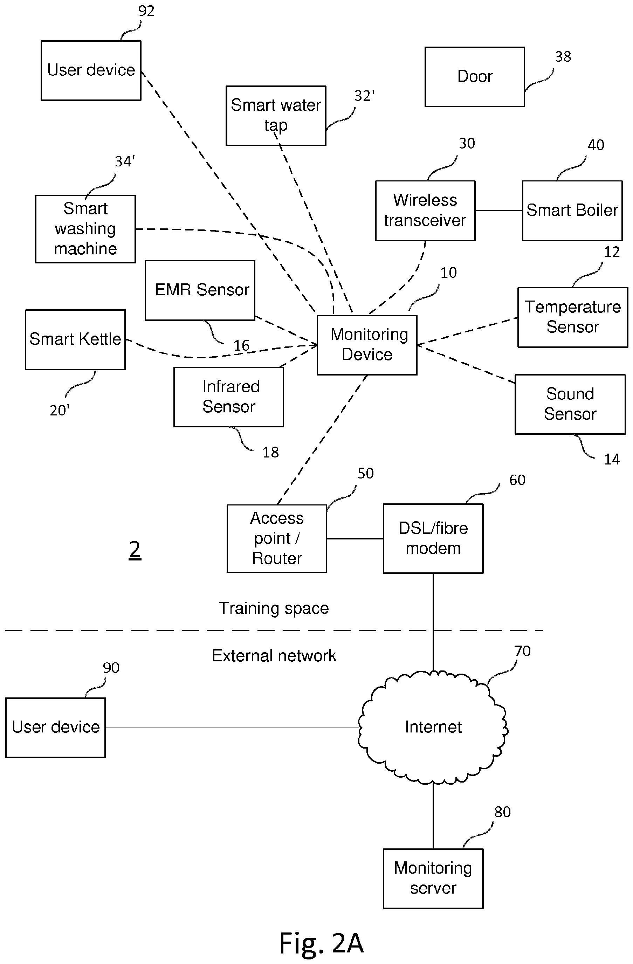

Figure 2A shows an exemplary system 2 for training or learning sensor signatures for identifying operation of devices. The training space of Figure 2A is similar to the monitoring space of Figure 1A. Like reference numerals are used to denote like components.

The main difference between the system 1 of Figure 1A and the system 2 of Figure 2A is that in system 2 there is means of reporting the operating states of appliances/devices in the training space to the monitoring device 10. In this case the reporting function is provided by the devices/appliances being smart devices capable of reporting their operations to the monitoring device. The smart devices are in short-range wireless communication with the monitoring device 10 (although wired communication is also contemplated). A smart kettle 20' is provided which can send a message indicative of its on/off state and/or when it has boiled to the monitoring device 10. The smart washing machine 34' can send a message indicative of its on/off status to the monitoring device 10. The smart washing machine 34' can also send a message indicating the stage in the cycle (e.g. spin, wash, dry) to the monitoring device 10. The smart water tap 32' can also send a binary indication of On/Off operative state to the monitoring device, optionally along with flow rate and/or water temperature information to the monitoring device 10.

In some embodiments it is possible to alter the attributes of the training space, for example the spatial dimensions, background noise, ambient temperature, electromagnetic resonance profile, and/or to measure changes in attributes.

In alternative embodiments, the means of reporting the operating states of appliances in the training space is by a user interface, via which an operator can input or confirm details of the operating states of the one or more appliances in the space. In such an example, the appliances do not have to be smart appliances. Alternatively or additionally, the means of reporting the operating states of appliance could be a camera having recognition software allowing the operating states of an appliance to be identified, for example software operable to allow the monitoring device 10 to recognise the operating state of an appliance/device, e.g. identifying a tap being on or off, or a door or window being open or closed.

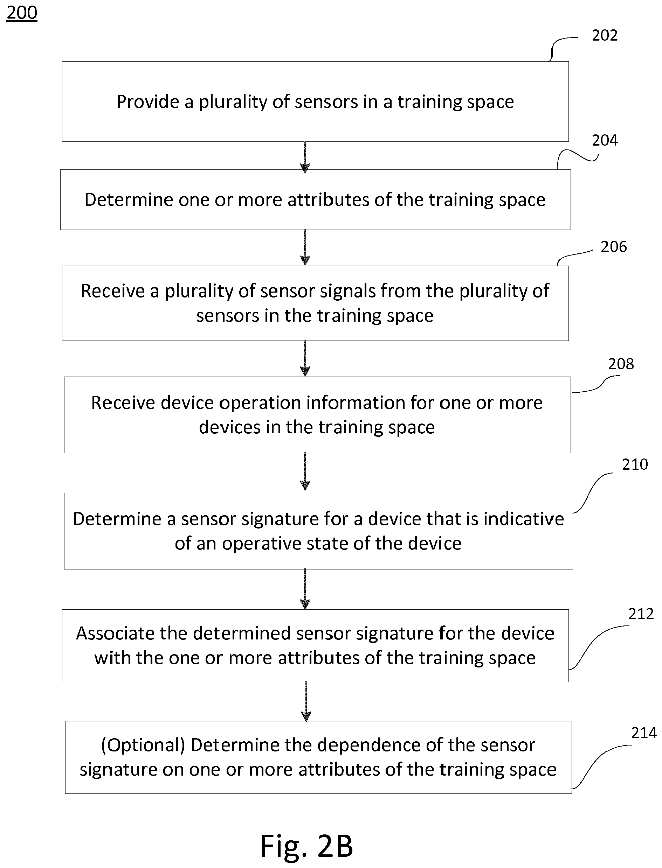

Figure 2B shows an exemplary method 200 for learning or developing sensor signatures in a training space.

At step 202 a plurality of sensors are provided in the training space. As shown in Figure 2A, these sensors will generally measure a plurality of different characteristics of the training space.

At step 204 the values of one or more attributes of the training space are identified, such as the spatial dimensions, background noise, ambient temperature, electromagnetic resonance profile.

At step 206 a plurality of sensor signals are received from the plurality of sensors provided in step 202.

At step 208 device operation information for one or more devices in the training space is received. Such device operation information could be reported directly by the devices themselves, such as in the form of messages received from smart devices as shown in Figure 2A. The device operation information includes at least a device type and an operative state (e.g. On/Off) or mode of the device.

At step 210 a sensor signature is determined from the plurality of sensor signals received in step 206. The sensor signature is determined as being indicative of a particular device type and operative state/function of that device from the information received in step 208.

In step 212 the sensor signature for the device is associated with the values of the one or more attributes of the training space.

In optional step 214, the dependence of the sensor signature on the attribute(s) of the training space is identified. For example, correlations between the sensor signature (e.g. specific values of sensor readings, or values of the measured characteristics) and the values of the attribute(s) can be identified. This can be done by changing an attribute of the training space and repeating the method of steps 202 to 212, or could be done by repeating the steps 202 to 212 in a different space having differences in at least one attribute. Determining the dependence of the sensor signature on the attributes may comprise deriving a measure of the dependence on the attribute, or an impact score. Deriving the impact score may comprise identifying the attributes that cause a non-zero change in the signature (or a change in the signature above a change threshold), and classifying those attributes as relevant attributes for that sensor signature (e.g. for all sensor signatures indicative of the particular operative state of a given device type). The measure of the dependence, or impact score, may be determined by identifying the correlation of the degree of difference in the sensor signature (e.g. the change in the value of each of the sensor signals/measured characteristics) caused by changing the value of each of the relevant attributes.

Whilst the method steps have been shown in a particular order, other orders could be provided. For example, step 204 could be performed prior to step 202, between step 206 and 208 or even after steps 208 or 210. Step 204 should be performed before step 212. Additionally, although the order of steps 206 and 208 is not critical, in some embodiments these steps would be performed concurrently (e.g. device operation information and sensor signals would be received simultaneously.

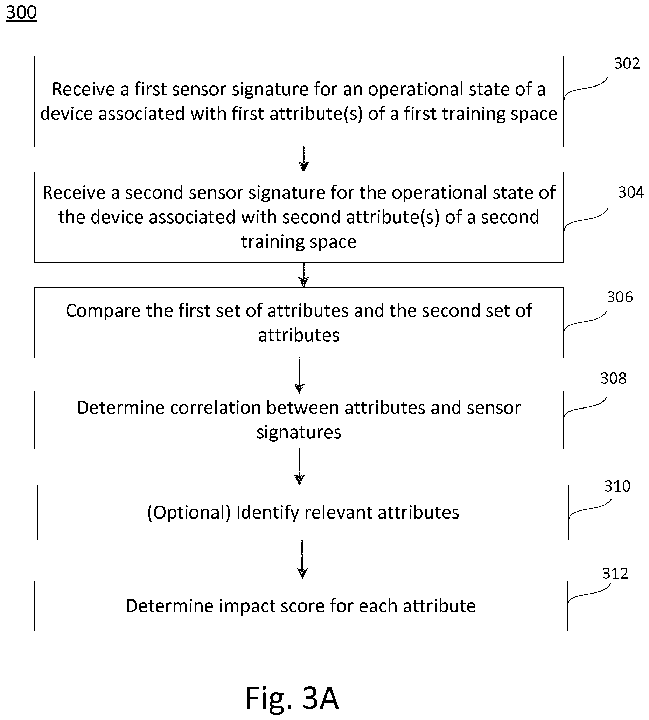

Figure 3A shows a method 300 for determining the dependence of a sensor signature on the attributes of the space from sensors trained in two different training spaces.

At step 302 a first sensor signature is received that is indicative of an operational state of a device and is associated with a first set values of one or more attributes of a first training space. The first sensor signature may have been derived according to steps 202 to 212 of method 200 of Figure 2B, performed in the first training space.

At step 304 a second sensor signature is received that is indicative of the same operational state of the same type of device as the first sensor signature, but this time is associated with a second set of values of the one or more attributes for a second training space. The second set comprises the same types of attributes as the first set, but each the value of each attribute is measured for the second training space, rather than for the first training space. The second sensor signature may also have been derived according to steps 202 to 212 of method 200 of Figure 2B, performed in the second training space. The value of at least one of the attributes of the second training space differs from the same/equivalent attribute of the first training space. For example, a spatial dimension of the second training space may be larger or smaller, or an ambient noise profile may be different between the two training spaces.

At step 306 the first and second sets of values of attributes are compared to derive, for each attribute in the sets, a difference between the value of that attribute in the first set of attributes (i.e. in the first training space) and in the second set of attributes (i.e. in the second training space). The derived difference between the values of the attributes in the first and second sets may be a measure of the absolute difference between the values of the attributes, or may be the relative difference (e.g. the value of the attribute in the first set as a proportion of the value of that attribute in the second set). For example, where the attribute is volume of the space, if the volume of the first space is 50m³ and the volume of the second space is 75m³, the difference could be calculated either as 25m³ (actual value) or as a factor of 1.5.

At step 308 the correlation between the first sensor signature and the second sensor signature and the first set of values of attributes and the second set of values of attributes is determined. For example, for each attribute in the sets of attributes, the correlation between the value of each equivalent attribute in the sets of attributes and the value of each measured characteristic in the sensor signatures may be determined. This step may include comparing the first and second sensor signatures to identify the difference between the values of each measured characteristic in the first and second sensor signatures.

At optional step 310, the relevant attributes that cause a change in the sensor signature are determined and classified as relevant attributes for a sensor signature for the device type and function/operative state. In some embodiments, relevant attributes are attributes that cause more than a predetermined change threshold in the sensor signature. The change threshold can be an absolute threshold, or a proportional threshold.

At step 312 a measure of the impact of changing each (relevant) attribute on the sensor signature is determined. This is sometimes referred to as the impact score for each attribute. For example, where a linear relationship between an attribute and a sensor signal or characteristic value is found (e.g. so that a trend line, having a slope could be identified), the measure of the impact may be determined from the slope.

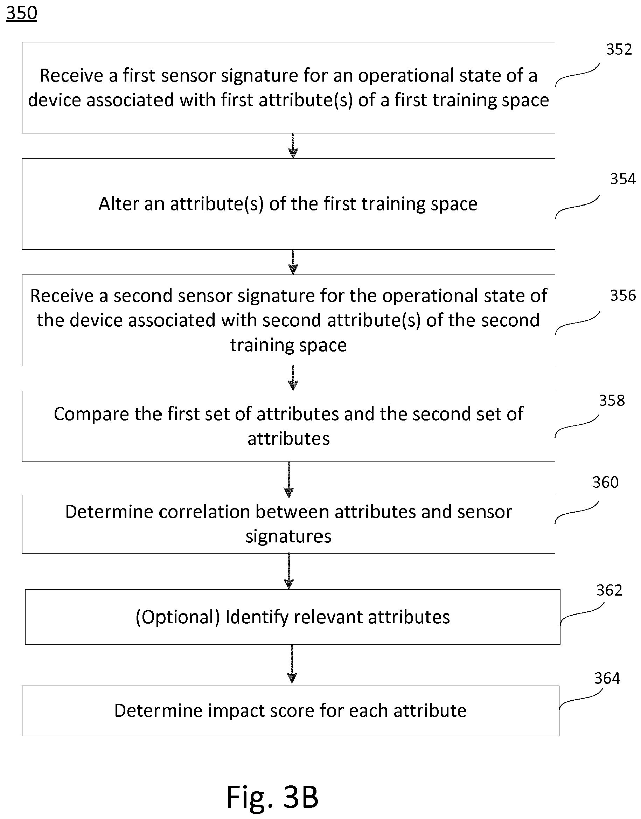

Figure 3B shows an alternative method 350 for determining the dependence of a sensor signature on the attributes of the space by changing the attributes of the training space.

At step 352 a first sensor signature is received that is indicative of an operational state of a device and is associated with a first set of values of one or more attributes of a first training space. The first sensor signature may have been derived according to steps 202 to 212 of method 200 of Figure 2B, performed in the first training space.

At step 354 at least one attribute of the first training space is altered, so that the first training space has a second set of values of the one or more attributes. For example, the room layout may be altered, windows and doors may be opened/closed. In some cases attributes can effectively be altered by moving the sensors. In some examples the sensors are mobile so can move automatically, e.g. a sensor in a robotic vacuum cleaner.

At step 356, a second sensor signature is received that is indicative of the same operational state of the same type of device as the first sensor signature, but this time is associated with the second set of values of the one or more attributes of the first training space. The second sensor signature may also have been derived according to steps 202 to 212 of method 200 of Figure 2B, performed in the second training space. At least one of the attributes of the second set of attributes differs from the same/equivalent attribute of the first set of attributes. For example, a spatial dimension in the second set of attributes may be larger or smaller, or an ambient noise profile may be different between the two sets of attributes.

At step 358 the first and second sets of values of the attributes are compared to derive, for each attribute in the sets, a difference between the value of that attribute in the first set of attributes and in the second set of attributes. As above, the derived difference between the values of the attributes in the first and second sets may be a measure of the absolute difference between the values of the attributes, or may be the relative difference (e.g. the value of the attribute in the first set as a proportion of the value of that attribute in the second set).

At step 360 the correlation between the first sensor signature and the second sensor signature and the first set of values of attributes and the second set of values of attributes is determined. For example, for each attribute in the sets of attributes, the correlation between the value of each equivalent attribute in the sets of attributes and the value of each measured characteristic in the sensor signatures may be determined. This step may include comparing the first and second sensor signatures to identify the difference between the values of each measured characteristic in the first and second sensor signatures.

At optional step 362, the relevant attributes that cause a change in the sensor signature are determined and classified as relevant attributes for a sensor signature for the device type and function/operative state. In some embodiments, relevant attributes are attributes that cause more than a predetermined change threshold in the sensor signature.

At step 364 a measure of the impact of changing each (relevant) attribute on the sensor signature is determined, e.g. the impact score. For example, where a linear relationship between an attribute and a sensor signal or characteristic value is found, the measure of the impact may be determined from the proportionality constant (e.g. slope).

For improved results, the method 300 of Figure 3A or 3B further comprises receiving third, and optionally further, sensor signatures indicative of the same operation of the same device type associated with a third (and optionally further) set of values of the attributes, e.g. by changing the values of the attributes of the first space (again, e.g. to a third set of attributes), or by generating the sensor function in a third space, having a third set of values of the attributes. Then the steps 306 or 358 may comprise comparing first, second, third and further sets of attributes.

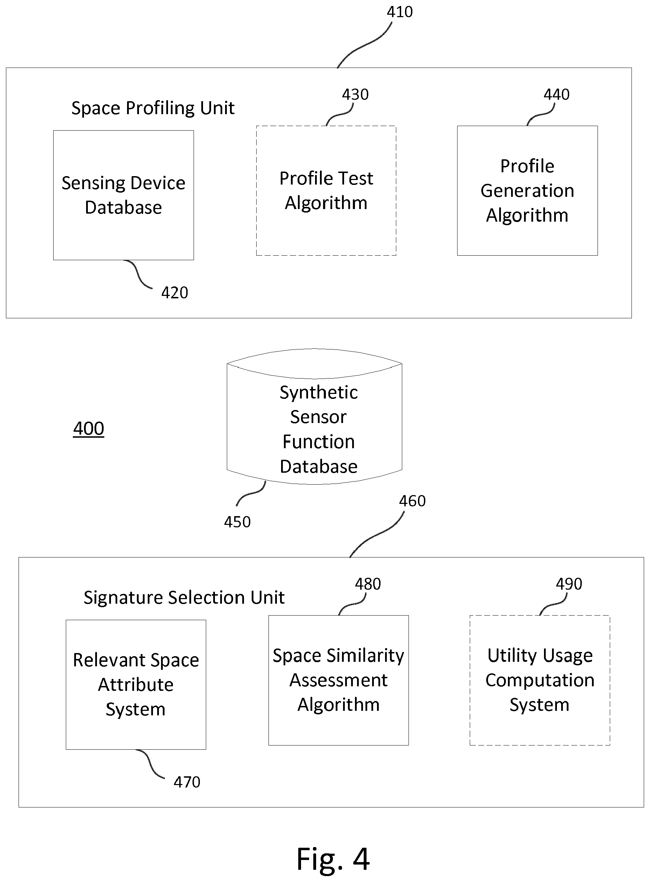

Figure 4 shows a schematic diagram of a monitoring device 400 that can be used for identifying operative states of devices, for example it may be used as the monitoring device 10 shown in Figure 1A.

The monitoring device 400 includes a space profiling unit 410, which generates a profile of attributes for a (training/monitoring) space. In some embodiments, e.g. where the monitoring device 400 is provided remotely from the monitoring space, the monitoring device is capable of generating a profile for each of a plurality of spaces. In some cases the profile of attributes is created by utilising the sensing capabilities of sensing or other devices within the space.

The space profiling unit 410 may comprise a sensing device database 420. The sensing device database 420 contains details of the various devices within the space which contain sensors capable of gathering data. Such sensor data can be used for generating a space profile, relating to attributes of the space. In some cases sensor data may be retrieved passively from the sensing devices. Such sensing devices may be one of: permanently or semi-permanently fixed sensors within the space (e.g. light, sound, EMR sensors); connected appliances with sensing capabilities; and automated mobile devices within the space, such as robotic vacuum cleaners, drones or helper robots. Some examples of sensing devices are shown in Figures 1A and 2A.

When the monitoring device 400 is to be used in a testing space, the space profiling unit 410 contains a profile test protocol algorithm 430. This is an algorithm which generates specific testing protocols for the available sensing devices in order to generate sensor signatures. The profile test protocol algorithm 430 can take into account the capabilities of each sensing device (e.g. whether it is mobile, what kind of data it can gather) and/or the requirements for generating a space profile. For example, the requirements for generating a space profile may be informed by applicable synthetic sensor functions (e.g. sensor signatures relating to one particular function/operation of one type of appliance/device). The generating of a sensor signature may also be dependent on the values of attributes of the spaces. In one example, a test event such as a sound, event or robot vacuum cleaning route could be designed/altered and triggered/applied in the same/equivalent/corresponding location in multiple spaces to enable improved direct comparison. In one embodiment, a test event is applied in a test space and the values of characteristics measured by a plurality of sensors in the test space are received to develop a sensor response profile to the test event in the test space. The same test event can then be applied in a monitoring space and a sensor response profile to the test event in the monitoring space (values of characteristics measured by a plurality of corresponding sensors in the monitoring space) developed. Then the sensor response profile to the test event in the monitoring space can be compared to the sensor response profile to the test event in the test space to determine a measure of the similarity of the spaces.

The space profiling unit 410 also includes a space profile generation algorithm 440, which processes the sensor data or other received inputs (e.g. operator/user inputs) in order to generate a profile for the space. The profile for the space includes the attributes of the space, such as dimensions, area/volume, electromagnetic signature profile, thermal signature profile or acoustic profile.

The space profiling generation algorithm 440 may be repeated periodically in order to update the space profile, e.g. weekly or monthly, or only when changes are reported, for example when the layout of a space is changed.

The monitoring device 400 also comprises a synthetic sensor function database 450. The synthetic sensor function database 450 contains a list of (predefined) synthetic sensor functions, or signatures, and data associated with each, including:
i. The corresponding device/appliance to which the synthetic sensor function/signature relates, e.g. "kitchen tap", "dishwasher", "blender", "door";
ii. The event or operation or operative state to which the sensor function/signature relates, e.g. for a tap "on" or "off", or for a door "open" or "closed";
iii. Training space identification - Identification tags (e.g. ID numbers) of the training space corresponding to the trained synthetic sensor function, e.g. the training space in which the sensor was trained;
iv. Relevant space attributes - a list of attributes which have a non-zero effect (or effect larger than a change threshold) on the synthetic sensor function or signature, e.g. ambient EMR profile, acoustic profile for a 'Blender on/off synthetic sensor function. A score (the "Impact Score") can be included with this data, indicating how sensitive the synthetic sensor function is to a change in the relevant space attribute;
v. Consumption equation - optionally a consumption equation is provided, which can be used to calculate the consumption (e.g. of a utility such as gas, electricity or water) of each synthetic sensor function/signature. The consumption equation may be specific to a particular space. For example, a 'Kitchen Tap Status' Synthetic Sensor Function might have an associated equation detailing the energy consumption (rate) for a year.

The monitoring device 400 also includes a sensor selection unit 460, which matches trained synthetic sensor signatures/functions from training spaces to monitoring spaces, based on the similarity of attribute profiles, or sets of attributes, of the training space and monitoring space, and optionally on the potential utility/efficacy a synthetic sensor signature may have within the monitoring space. The sensor selection unit 460 may comprise of the following sub-components:
i. Relevant space attribute system 470 - a system which identifies the relevant attributes for Synthetic Sensor Functions trained in a particular training space, and stores or updates this information in the Synthetic Sensor Function Database 450. Multiple embodiments for the relevant space attribute system 470 could exist, which may include one or more of the following components:
   - An attribute algorithm which uses data from multiple training spaces which employ the same synthetic sensor function/signature to identify the relevant space attributes. For example, the attribute algorithm may identify two training spaces which have similar space profiles with the exception of a few attributes, and identify how important these attribute differences are through comparison of recognised data patterns for the synthetic sensor function in the two training spaces.
   - A an attribute change system, which alters conditions (attributes) within a single training space and identifies how alteration of these conditions affects the efficacy of the synthetic sensor for different synthetic sensor functions. For example, attributes within a space profile can be changed by altering room layout, opening or closing windows and doors, and the effects of this on a particular synthetic sensor function can be observed. Additionally, movement of sensors that make up the synthetic sensor itself can effectively alter the dimensions of a space profile, and the effect of this on synthetic sensor functions can be observed.
ii. Space similarity assessment algorithm 480 - an algorithm which scores the similarity of space profile dimensions of a monitoring space and a training space (the "similarity score"), by comparing the relevant space attributes from the synthetic sensor function database 450 to the equivalent attributes in the profile of the monitoring space.
iii. Optional utility usage computation system 490 - a system which determines a utility usage for the monitoring space based on the identified function/operative state of the device(s) in the space. For example, this may comprise gas or electricity or water usage data, e.g. a rate of electricity consumption.

While a specific architecture is shown, any appropriate hardware/software architecture may be employed. For example, external communication may be via a wired network connection.

The above embodiments and examples are to be understood as illustrative examples. Further embodiments, aspects or examples are envisaged. It is to be understood that any feature described in relation to any one embodiment, aspect or example may be used alone, or in combination with other features described, and may also be used in combination with one or more features of any other of the embodiments, aspects or examples, or any combination of any other of the embodiments, aspects or examples. Furthermore, equivalents and modifications not described above may also be employed without departing from the scope of the invention, which is defined in the accompanying claims.

Aspects of the apparatus and methods described herein are further exemplified in the following numbered clauses:
1. A method of identifying a sensor signature indicative of an operative state of a device, the method comprising:
   providing a plurality of sensors in a training space, each sensor operable to measure a different characteristic;
   determining the values of one or more attributes of the training space;
   receiving a plurality of sensor signals, each sensor signal indicative of a different characteristic measured by one of the plurality of sensors in the training space;
   receiving device operation information comprising the type and operative state of a device in the training space;
   determining, from the received plurality of sensor signals and the received device operation information, a sensor signature comprising values of a combination of different measurable characteristics that are indicative of an operative state of the device;
   associating the determined sensor signature with the determined values of the one or more attributes of the training space; and
   storing the determined sensor signature together with the associated values of the one or more attributes.
2. The method of clause 1, wherein receiving device operation information comprises:
   receiving a communication from the device in the training space, the communication comprising the operative state of the device in the training space (and preferably the type of appliance, or an appliance identifier).
3. The method of clause 1, wherein receiving device operation information comprises:
   receiving a copy of a control command sent to the device in the training space.
4. A method of identifying the dependence of a sensor signature on attributes of a space, the method comprising:
   performing the method of clause 1 or 2 in a first training space having a first set of values of one or more attributes to determine a first sensor signature comprising a first set of values of a combination of different measurable characteristics that are indicative of an operative state of a device that is associated with the first set of attributes;
   performing the method of clause 1 or 2 in a second training space having a second set of values of the one or more attributes to determine a second sensor signature comprising a second set of values of the combination of different measurable characteristics that are indicative of the operative state of the device that is associated with the second set of values of the one or more attributes;
   comparing the first set of values of the one or more attributes and the second set of values of the one or more attributes;
   comparing the first sensor signature and the second sensor signature; and
   correlating changes in each of the attributes with changes in the values of the different measurable characteristics of the sensor signatures.
5. A method of identifying the dependence of a sensor signature on attributes of a space, the method comprising:
   performing the method of clause 1 or 2 in a first training space having a first set of values of one or more attributes to determine a first sensor signature comprising a first set of values of a combination of different measurable characteristics that are indicative of an operative state of a device that is associated with the first set of values of the one or more attributes;
   altering one or more of the attributes of the first training space, to provide a second set of values of the one or more attributes;
   performing the method of clause 1 or 2 in the first training space having the second set of values of the one or more attributes to determine a second sensor signature comprising a second set of values of the combination of different measurable characteristics that are indicative of the operative state of the device that is associated with the second set of values of the one or more attributes;
   comparing the first set of values of the one or more attributes and the second set of values of the one or more attributes;
   comparing the first sensor signature and the second sensor signature; and
   correlating changes in each of the attributes with changes in the values of the different measurable characteristics of the sensor signatures.
6. A method according to clause 4 or 5, wherein the step of correlating changes in each of the attributes with changes in the values of the different measurable characteristics of the sensor signatures comprises:
   identifying an attribute score for each of the attributes indicative of the sensitivity of the sensor signature to the attribute, based on the comparison of the first set of values of the different measurable characteristics and the second set of values of the different measurable characteristics and the comparison of the first set of values of the one or more attributes and the second set of values of the one or more attributes.
7. A method according to any preceding clause, further comprising identifying the operative state of a device in a monitoring space by:
   determining the values of the one or more attributes for the monitoring space;
   receiving a plurality of sensor signals, each sensor signal indicative of a different characteristic measured in the monitoring space;
   identifying the determined sensor signature as being relevant to the monitoring space based on a comparison of the values of the one or more attributes for the training space and the values of the one or more attributes for the monitoring space;
   comparing the plurality of sensor signals to the determined sensor signature; and
   identifying an operative state of a device in the space based on the comparison.
8. A method of identifying the operative state of a device in a monitoring space, the method comprising:
   determining the values of one or more attributes of the monitoring space;
   receiving a set of sensor signatures, each signature comprising values of a plurality of different measurable characteristics that are indicative of an operative state of a device;
   selecting, from the set of sensor signatures, a subset of relevant sensor signatures based on the values of the one or more attributes of the monitoring space;
   receiving a plurality of sensor signals, each sensor signal indicative of a different characteristic measured in the monitoring space;
   comparing the plurality of sensor signals to the subset of relevant sensor signatures; and
   identifying an operative state of a device in the monitoring space based on the comparison.
9. A method according to any of clauses 7 or 8, further comprising:
   controlling the operative state of the device (and/or another device) in the monitoring space based on the identification of the operative state of the device.
10. A method according to any of clauses 7 to 9, further comprising:
   outputting the identified operative state of the device in the monitoring space, and preferably outputting an identifier of the device/device type, optionally by displaying information indicative of the identified operative state on a user interface.
11. A method according to any of clauses 7 to 10, further comprising:
   calculating (and optionally outputting) a utility consumption (rate) based on the identified operative state of the device, such as electricity, gas or water consumption.
12. A method according to any of clauses 7 to 11, wherein the step of comparing the plurality of sensor signals to the determined sensor signature or the subset of relevant sensor signatures comprises:
   identifying the difference between each measured characteristic and the value of the corresponding measurable characteristic in the determined sensor signature or the subset of relevant sensor signatures.
13. A method according to any of clauses 7 to 12, wherein identifying the determined sensor signature as being relevant to the monitoring space or selecting a subset of relevant sensor signatures comprises:
   calculating for each sensor signature a similarity score based on a comparison of the associated values of the one or more attributes of the sensor signature and the values of the one or more attributes of the monitoring space.
14. A method according to clause 13, wherein each characteristic is assigned a weighting to calculate the similarity score, preferably further comprising the step of clause 6 and wherein the weighting is selected in dependence on the attribute score for each of the attributes, more preferably wherein the weighting for each attribute is proportional to its attribute score.
15. A method according clause 13 or 14, wherein identifying the determined sensor signature as being relevant to the monitoring space or selecting a subset of relevant sensor signatures comprises:
   selecting for a particular operative state of a device in the monitoring space the sensor signature having either:
   the highest similarity score of a plurality of sensor signatures; and/or
   a similarity score that is higher than a predetermined similarity threshold.
16. The method of any preceding clause, wherein the one or more attributes of the training or monitoring space are selected from the list comprising:
   spatial dimensions of the space or floorplan(s);
   electromagnetic resonance profile of the space;
   acoustic behaviour of the space;
   ambient temperature or thermal signature of the space.
17. A non-transient computer-readable medium comprising instructions which, when executed by a computer, cause the computer to carry out the method of any preceding clause.
18. A system for identifying a sensor signature indicative of an operative state of a device, the system comprising:
   an interface operable to:
      receive signals from a plurality of sensors in a training space, each sensor operable to measure a different characteristic;
      receive signals indicative of the values of one or more attributes of the training space; and
      receive device operation information comprising the type and operative state of a device in the training space;
   a processor operable to:
      determine, from the received plurality of sensor signals and the received device operation information, a sensor signature comprising values of a combination of different measurable characteristics that are indicative of an operative state of the device; and
      associate the determined sensor signature with the determined values of the one or more attributes of the training space; and
   a memory operable to:
      store the determined sensor signature together with the associated values of the one or more attributes.
19. A system according to clause 18, further operable to perform the method of any of clauses 2 to 16.
20. A monitoring device for identifying the operative state of a device in a monitoring space, the device comprising:
   an interface operable to:
      receive signals indicative of the values of one or more attributes of the monitoring space; and
      receive a plurality of sensor signals, each sensor signal indicative of a different characteristic measured in the monitoring space;
   a memory storing a set of sensor signatures, each signature comprising values of a plurality of different measurable characteristics that are indicative of an operative state of a device;
   a processor operable to:
      select, from the set of sensor signatures, a subset of relevant sensor signatures based on the values of the one or more attributes of the monitoring space;
      compare the plurality of sensor signals to the subset of relevant sensor signatures; and
      identify an operative state of a device in the monitoring space based on the comparison.
21. A monitoring device according to clause 20, wherein:
   the processor is further operable to:
      select a control command for the device (and/or another device) based on the identified operative state of the device; and
   a communication interface operable to:
      send to the device (and or the another device) the control command.
22. A monitoring device according to clause 20 or 21, further comprising:
   an interface, optionally a user interface such as a screen, operable to output details of the identified operative state of the device in the monitoring space, and preferably an identifier of the device or device type.
23. A monitoring device according to any of clauses 20 to 22, wherein the processor is further operable to:
   calculate a utility consumption (rate) based on the identified operative state of the device, such as electricity, gas or water consumption; preferably further comprising
   an interface, optionally a user interface such as a screen, operable to output the calculated utility consumption (rate).
24. A monitoring device according to any of clauses 20 to 23, wherein the processor is operable to compare the plurality of sensor signals to the determined sensor signature or the subset of relevant sensor signatures by:
   identifying the difference between each measured characteristic and the value of the corresponding measurable characteristic in the determined sensor signature or the subset of relevant sensor signatures.
25. A monitoring device according to any of clauses 20 to 24, wherein the processor is operable to identify the determined sensor signature as being relevant to the monitoring space or selecting a subset of relevant sensor signatures by:
   calculating for each sensor signature a similarity score based on a comparison of the associated values of the one or more attributes of the sensor signature and the values of the one or more attributes of the monitoring space.
26. A system according to clause 20, further operable to perform the method of any of clauses 9 to 16.

## Claims

1. A method of identifying a sensor signature indicative of an operative state of a device, the method comprising:
providing a plurality of sensors in a training space, each sensor operable to measure a different characteristic;
determining the values of one or more attributes of the training space;
receiving a plurality of sensor signals, each sensor signal indicative of a different characteristic measured by one of the plurality of sensors in the training space;
receiving device operation information comprising the type and operative state of a device in the training space;
determining, from the received plurality of sensor signals and the received device operation information, a sensor signature comprising values of a combination of different measurable characteristics that are indicative of an operative state of the device;
associating the determined sensor signature with the determined values of the one or more attributes of the training space; and
storing the determined sensor signature together with the associated values of the one or more attributes.

2. The method of claim 1, wherein receiving device operation information comprises:
receiving a communication from the device in the training space, the communication comprising the operative state of the device in the training space (and preferably the type of appliance, or an appliance identifier), or wherein receiving device operation information comprises:
receiving a copy of a control command sent to the device in the training space.

3. A method of identifying the dependence of a sensor signature on attributes of a space, the method comprising:
performing the method of claim 1 or 2 in a first training space having a first set of values of one or more attributes to determine a first sensor signature comprising a first set of values of a combination of different measurable characteristics that are indicative of an operative state of a device that is associated with the first set of attributes;
performing the method of claim 1 or 2 in a second training space having a second set of values of the one or more attributes to determine a second sensor signature comprising a second set of values of the combination of different measurable characteristics that are indicative of the operative state of the device that is associated with the second set of values of the one or more attributes;
comparing the first set of values of the one or more attributes and the second set of values of the one or more attributes;
comparing the first sensor signature and the second sensor signature; and
correlating changes in each of the attributes with changes in the values of the different measurable characteristics of the sensor signatures.

4. A method of identifying the dependence of a sensor signature on attributes of a space, the method comprising:
performing the method of claim 1 or 2 in a first training space having a first set of values of one or more attributes to determine a first sensor signature comprising a first set of values of a combination of different measurable characteristics that are indicative of an operative state of a device that is associated with the first set of values of the one or more attributes;
altering one or more of the attributes of the first training space, to provide a second set of values of the one or more attributes;
performing the method of claim 1 or 2 in the first training space having the second set of values of the one or more attributes to determine a second sensor signature comprising a second set of values of the combination of different measurable characteristics that are indicative of the operative state of the device that is associated with the second set of values of the one or more attributes;
comparing the first set of values of the one or more attributes and the second set of values of the one or more attributes;
comparing the first sensor signature and the second sensor signature; and
correlating changes in each of the attributes with changes in the values of the different measurable characteristics of the sensor signatures.

5. A method according to claim 3 or 4, wherein the step of correlating changes in each of the attributes with changes in the values of the different measurable characteristics of the sensor signatures comprises:
identifying an attribute score for each of the attributes indicative of the sensitivity of the sensor signature to the attribute, based on the comparison of the first set of values of the different measurable characteristics and the second set of values of the different measurable characteristics and the comparison of the first set of values of the one or more attributes and the second set of values of the one or more attributes.

6. A method according to any preceding claim, further comprising identifying the operative state of a device in a monitoring space by:
determining the values of the one or more attributes for the monitoring space;
receiving a plurality of sensor signals, each sensor signal indicative of a different characteristic measured in the monitoring space;
identifying the determined sensor signature as being relevant to the monitoring space based on a comparison of the values of the one or more attributes for the training space and the values of the one or more attributes for the monitoring space;
comparing the plurality of sensor signals to the determined sensor signature; and
identifying an operative state of a device in the space based on the comparison.

7. A method of identifying the operative state of a device in a monitoring space, the method comprising:
determining the values of one or more attributes of the monitoring space;
receiving a set of sensor signatures, each signature comprising values of a plurality of different measurable characteristics that are indicative of an operative state of a device;
selecting, from the set of sensor signatures, a subset of relevant sensor signatures based on the values of the one or more attributes of the monitoring space;
receiving a plurality of sensor signals, each sensor signal indicative of a different characteristic measured in the monitoring space;
comparing the plurality of sensor signals to the subset of relevant sensor signatures; and
identifying an operative state of a device in the monitoring space based on the comparison.

8. A method according to any of claims 6 or 7, further comprising:
controlling the operative state of the device (and/or another device) in the monitoring space based on the identification of the operative state of the device, preferably further comprising:
outputting the identified operative state of the device in the monitoring space, and preferably outputting an identifier of the device/device type, optionally by displaying information indicative of the identified operative state on a user interface.

9. A method according to any of claims 6 to 8, further comprising:
calculating (and optionally outputting) a utility consumption (rate) based on the identified operative state of the device, such as electricity, gas or water consumption, and/or wherein the step of comparing the plurality of sensor signals to the determined sensor signature or the subset of relevant sensor signatures comprises:
identifying the difference between each measured characteristic and the value of the corresponding measurable characteristic in the determined sensor signature or the subset of relevant sensor signatures.

10. A method according to any of claims 6 to 9, wherein identifying the determined sensor signature as being relevant to the monitoring space or selecting a subset of relevant sensor signatures comprises:
calculating for each sensor signature a similarity score based on a comparison of the associated values of the one or more attributes of the sensor signature and the values of the one or more attributes of the monitoring space, preferably wherein each characteristic is assigned a weighting to calculate the similarity score, preferably further comprising the step of claim 5 and wherein the weighting is selected in dependence on the attribute score for each of the attributes, more preferably wherein the weighting for each attribute is proportional to its attribute score, and/or wherein identifying the determined sensor signature as being relevant to the monitoring space or selecting a subset of relevant sensor signatures comprises:
selecting for a particular operative state of a device in the monitoring space the sensor signature having either:
the highest similarity score of a plurality of sensor signatures; and/or
a similarity score that is higher than a predetermined similarity threshold.

11. The method of any preceding claim, wherein the one or more attributes of the training or monitoring space are selected from the list comprising:
spatial dimensions of the space or floorplan(s);
electromagnetic resonance profile of the space;
acoustic behaviour of the space;
ambient temperature or thermal signature of the space.

12. A non-transient computer-readable medium comprising instructions which, when executed by a computer, cause the computer to carry out the method of any preceding claim.

13. A system for identifying a sensor signature indicative of an operative state of a device, the system comprising:
an interface operable to:
receive signals from a plurality of sensors in a training space, each sensor operable to measure a different characteristic;
receive signals indicative of the values of one or more attributes of the training space; and
receive device operation information comprising the type and operative state of a device in the training space;
a processor operable to:
determine, from the received plurality of sensor signals and the received device operation information, a sensor signature comprising values of a combination of different measurable characteristics that are indicative of an operative state of the device; and
associate the determined sensor signature with the determined values of the one or more attributes of the training space; and
a memory operable to:
store the determined sensor signature together with the associated values of the one or more attributes.

14. A monitoring device for identifying the operative state of a device in a monitoring space, the device comprising:
an interface operable to:
receive signals indicative of the values of one or more attributes of the monitoring space; and
receive a plurality of sensor signals, each sensor signal indicative of a different characteristic measured in the monitoring space;
a memory storing a set of sensor signatures, each signature comprising values of a plurality of different measurable characteristics that are indicative of an operative state of a device;
a processor operable to:
select, from the set of sensor signatures, a subset of relevant sensor signatures based on the values of the one or more attributes of the monitoring space;
compare the plurality of sensor signals to the subset of relevant sensor signatures; and
identify an operative state of a device in the monitoring space based on the comparison.

15. A system or device according to claim 13 or 14, further operable to perform the method of any of claims 2 to 11.
